# EUROPÄISCHE PATENTSCHRIFT

(11) **EP 2 110 351 B1**
(45) Veröffentlichungstag und Bekanntmachung des Hinweises auf die Patenterteilung: **10.07.2013**
(21) Anmeldenummer: 09005411.5
(22) Anmeldetag: 16.04.2009
(51) Int. Cl.: B65G 59/04, B21D 43/24

(54) **Hubtischabstapler**
Destaking device with lifting table
Dispositif de désempilage avec table de levage

(30) Priorität: 17.04.2008 CH 6062008
(43) Veröffentlichungstag der Anmeldung: 21.10.2009
(73) Patentinhaber: Soudronic AG, 8962 Bergdietikon (CH)
(72) Erfinder: Dieterich, Daniel, 8335 Hittnau (CH); Bertschi, Peter, 8902 Urdorf (CH)
(74) Vertreter: Schalch, Rainer

(56) Entgegenhaltungen:
- DE-A1- 10 313 299
- DE-A1- 19 616 820
- JP-U- 58 128 728
- JP-U- 58 189 033

## Beschreibung

### Hintergrund

Die Erfindung betrifft einen gattungsgemäßen Hubtischabstapler. Ferner betrifft die Erfindung ein Rundapparat und eine Widerstandsnahtschweissvorrichtung für Behälterzargen mit einem solchen Hubtischabstapler.

### Stand der Technik

Hubtischabstapler sind bekannt. Sie erlauben das Abstapeln von flächigen Gegenständen von einem Paket dieser Gegenstände, z.B. von einzelnen Blechen von einem Blechpaket. Gleichzeitig kann ein weiteres Paket auf dem Hubtisch unterhalb des in Arbeit befindlichen Paketes bereit gemacht und rechtzeitig vor Beendigung des in Arbeit befindlichen Pakets angehoben und hinzugefügt werden, so dass ein unterbruchsloser Abstapelbetrieb über mehrere Pakete der abzustapelnden Gegenstände möglich ist (so genannter Non-Stop-Hubtischabstapler). Die Formateinstellung der Halteeinrichtung für das Paket und des Abstaplers, der z.B. eine Saugereinheit umfasst, die die abzustapelnden Gegenstände mittels Unterdruck greift, erfolgt bei Hub-tischabstaplern manuell und ist zeitaufwändig. Besonders bei der Verwendung eines Hubtischabstaplers an einer Schweissvorrichtung für Behälterzargen ist für jede Änderung der Behälterhöhe und/oder des Behälterdurchmessers bzw. der entsprechenden Änderung des Formats des Blechpakets eine aufwändige Formateinstellung des Hubtisch-abstaplers notwendig.

Aus CH-A-696 486 ist eine nach unten abstapelnde Vorrichtung für Blechzuschnitte, aus denen Behälterzargen gebildet werden, bekannt, die ohne Hubtisch arbeitet. Dabei sind verstellbare seitliche Ausleger vorgesehen, um den Abstapler an die Dimension des Bleches anzupassen, die später die Höhe der Behälterzarge bestimmt; diese Verstellung kann auch motorisch erfolgen. In Abwicklungsrichtung der Behälterzarge ist hingegen nur eine händische Formateinstellung vorgesehen und das eigentliche Abstapelelement wird nicht verstellt.

Aus DE 19616820 A1 ist ein Magazinbaugestell gemäß dem Oberbegriff des Anspruchs 1 für einen Prüfmanipulator bekannt. Es umfasst unter anderem ein Hebewerk, welches Magazine auf eine vorbestimmte Position anhebt, und eine Halteeinrichtung zum Halten eines abgestapelten Magazins, wobei die Halteeinrichtung das Magazin von unten her aufnimmt. Nachdem ein Magazin angehoben wurde, wird es von einer Roboterhand oder einem Einlegemechanismus entladen. Die Halteeinrichtung umfasst ferner Magazinführungen zur Positionierung des Magazins und Magazineinstellstangen mit Magazinschiebern. Die Magazinschieber sind mit einem Antriebsmechanismus versehen.

JP 58 128728 U zeigt einen Hubtischabstapler mit Abstapelung von oben her mit Saugnäpfen.

### Darstellung der Erfindung

Der Erfindung liegt die Aufgabe zu Grunde, bei einem Hubtischabstapler einen Formatwechsel der abzustapelnden Gegenstände zu erleichtern und die Abstapelsicherheit zu verbessern.

Diese Aufgabe löst ein Hubtischabstapler nach Anspruch 1.

Durch die motorische Verstellung der Abstapeleinheit, die insbesondere eine Saugereinheit ist, in Kombination mit der motorischen Verstellung der Führungselemente, kann die Umrüstzeit deutlich verkürzt werden, wobei die Abstapelsicherheit durch die Anpassung der Lage der Abstapeleinheit erhalten bleibt.

Dadurch, dass die Lage der Abstapeleinheit in Abhängigkeit von der Verstellung der Führungselemente einstellbar ist, kann automatisch immer eine optimale Lage der Abstapeleinheit über dem Paket erzielt werden, wenn die Umrüstung auf ein neues Produktformat erfolgt.

Vorzugsweise sind zwei Führungselemente vorgesehen, welche bevorzugt vertikal angeordnete Führungsleisten sind, welche in ihrem unteren Bereich schwenkbare Klinken zum Halten des Blechpaketes aufweisen. Dadurch kann das vom Hubtisch angehobene Paket auf einfache Weise in der Halteeinrichtung aufgenommen werden und die Unterstützung durch die Klinken erfolgt an der richtigen, durch die Einstellung erzielten Position. Die motorische Verstellung der Führungselemente erfolgt einerseits zur Anpassung an die Dimension des Blechpaketes, die später die Höhe einer Behälterzarge ergibt. Andererseits kann auch mindestens eines der Führungselemente in der anderen Dimension des Blechpaketes motorisch einstellbar sein, die bei der Behälterzarge deren Umfang bzw. Durchmesser bestimmt.

Vorzugsweise wird der Hubtischabstapler bei einem Rundapparat zur Rundung von Blechabschnitten zu Behälterzargen-Rohlingen vorgesehen und führt diesem die einzelnen Blechabschnitte zu. Ein solcher Rundapparat ist dann vorzugsweise Teil einer Widerstandsnahtschweissvorrichtung für Behälterzargen aus Blech.

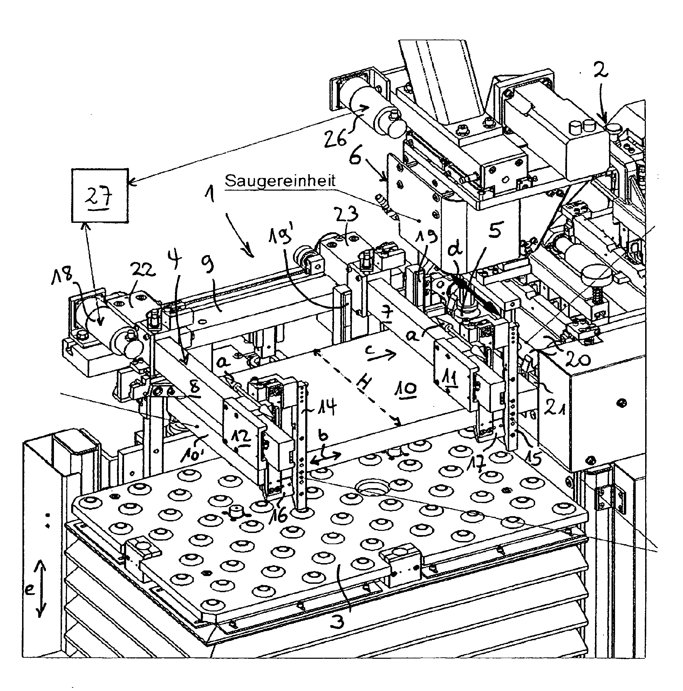

### Kurze Beschreibung der Zeichnung

Im Folgenden werden Ausführungsbeispiele der Erfindung anhand der Zeichnung näher erläutert. Dabei zeigt die einzige Figur eine schaubildliche Darstellung eines Hubtischabstaplers gemäss der Erfindung an einer nur teilweise dargestellten Rundungs- und Schweisseinrichtung.

### Wege zur Ausführung der Erfindung

Die Figur zeigt einen generell mit 1 bezeichneten Hubtischabstapler. Dieser ist einer nur teilweise dargestellten Rundmaschine 2 vorgeschaltet, welche Einzugswalzen 20 aufweist. In diesem bevorzugten Beispiel stapelt der Hubtischabstapler 1 somit einzelne Blechabschnitte von einem Blechpaket 10 ab und führt diese in die Rundmaschine 2. Dort werden diese Blechabschnitte zu Behälterzargen-Rohlingen gerundet, welche anschliessend in einer Widerstandsnahtschweissmaschine zu Behälterzargen geschweisst werden. Dies ist die bevorzugte Verwendung des dargestellten Hubtischabstaplers 1, welcher indes auch für andere Abstapelaufgaben eingesetzt werden kann.

Der Hubtischabstapler weist einen Hubtisch 3 auf, auf welchen die Pakete der abzustapelnden Produkte aufgeladen werden können, wenn sich der Hubtisch 3, der in Richtung des Pfeiles e auf- und abbewegt werden kann, in seiner unteren Beladestellung befindet. Der Hubtisch kann auch einen Rollentisch zur automatischen Beschickung aufweisen. Beim Anheben des Hubtisches 3 nach oben wird das nachfolgend abzustapelnde Blechpaket in einer Halteeinrichtung 4 des Hubtischabstaplers eingebracht und in dieser genau positioniert gehalten. Von dem in der Halteeinrichtung 4 gehaltenen Blechpaket 10 wird durch die Abstapeleinheit 6 von oben her abgestapelt. Die Abstapeleinheit 6 kann insbesondere eine Saugereinheit mit einem Vakuumsauger oder mehreren Vakuumsaugern sein, welche jeweils das oberste Blech des Stapels bzw. Paketes 10 anheben und in die Walzen 20 der Rundmaschine bewegen. Die Vereinzelung der Bleche kann dabei mittels Spreizmagneten erfolgen, was bekannt ist. Die Abstapeleinheit 6 ist mit einem entsprechenden Antrieb versehen, der diese Bewegung ermöglicht. Dies ist grundsätzlich bekannt und wird hier nicht weiter erläutert. Die Einbringung von unten her in die Halteeinrichtung 4 ist auf an sich bekannte Weise so gelöst, dass diese schwenkbare Halteklinken aufweist welche beim Anheben des einzuführenden Blechpaketes mittels des Hubtisches 3 durch die Oberkanten des Blechpaketes zurückgeschwenkt werden, so dass das Blechpaket in die Halteeinrichtung 4 von unten her eingeführt werden kann. Der Hubtisch hebt dabei das darauf unterstützt gehaltene Blechpaket soweit an, dass die schwenkbaren Klinken wieder frei werden und in ihre geschwenkte Position zurückschwenken. Wird dann der Hubtisch wieder nach unten verfahren, so kommt das Blechpaket bei seiner Abwärtsbewegung auf den wieder geschwenkten Klinken zur Auflage und ist damit in der Halteeinrichtung von unten her gehalten. Wie eingangs erwähnt, kann durch den Hubtisch des Hubtischabstaplers immer wieder ein neues Blechpaket in die Halteeinrichtung eingeführt werden, während das vorgängige Blechpaket noch abgestapelt wird. Der Hubtischabstapler ermöglicht damit einen ununterbrochenen Betrieb, bis alle Blechpakete abgearbeitet sind.

In der Halteeinrichtung 4 wird das Blechpaket positioniert. Dazu weist die Halteeinrichtung insbesondere feste Anschläge auf, wovon in der Figur die Anschläge 19 und 19' als Seitenanschläge für die längere hintere Seite des rechteckigen Blechpaketes 10 ersichtlich sind. Es können weitere solche Festanschläge vorhanden sein. Die in Abstapelrichtung vordere Stirnseite des Blechpaketes 10, welche somit näher bei den Walzen 20 liegt als die hintere Stirnseite 10', kann insbesondere an einem festen Anschlag 21 anliegen. Verstellbare Führungselemente zur Anpassung der Halteeinrichtung 4 an die jeweilige Blechgrösse bzw. Blechpaketgrösse, sind beispielshaft als Führungsleisten 14 und 15 dargestellt. Neben diesen Führungsleisten 14 und 15 sind zwei der bereits erwähnten schwenkbaren Klinken 16 und 17 gezeigt, welche das Blechpaket von unten her stützen. Natürlich sind auf der gegenüberliegenden Seite des Blechpaketes ebenfalls solche schwenkbaren Klinken vorgesehen, welche indes in der Figur nicht ersichtlich sind. Das Blechpaket 10 weist in der dargestellten Form eine kürzere Erstreckung H auf und eine in der Figur nicht bezeichnete längere Erstreckung, so dass das Paket eine Quaderform mit rechteckigem Grundriss aufweist; das Blech könnte stattdessen auch einen quadratischen Grundriss aufweisen. Die Quererstreckung H ergibt in der Produktion von Behälterzargen die Zargenhöhe. Die Längserstreckung ergibt den Umfang, bzw. den Durchmesser des Behälters. In der Produktion von Behälterzargen werden verschiedene Grössen von Blechabschnitten bzw. entsprechende Grössen von Blechpaketen verwendet. Insbesondere die Erstreckung H und damit die Behälterzargenhöhe wird häufig gewechselt. Zur Anpassung der Halteeinrichtung 4 an die Blechabmessungen bzw. die Paketabmessungen sind daher die Führungselemente bzw. die Führungsleisten 14 und 15 motorisch mittels der Steuerung 27 in ihrer Lage einstellbar. Mit eingestellt werden die Klinken 16 und 17. Zu diesem Zweck ist im gezeigten Beispiel die Halteeinrichtung mit Auslegern 8 und 7 versehen, welche sich über die Blechpaketposition der Halteeinrichtung 4 erstrecken. Die Ausleger 8 und 7 sind mit dem Maschinengestell 9 in Verbindung. Auf den Auslegern 8 und 7 laufen motorisch angetrieben die Schlitten 12 bzw. 11, welche in Richtung der Pfeile a verfahrbar sind. Diese Schlitten tragen wiederum die erwähnten Führungselemente bzw. die Führungsleisten 14 und 15 und die Klinken 16 und 17. Durch die motorische Schlittenverstellung an den Auslegern ergibt sich somit eine Anpassung an die Erstreckung H des Blechpaketes. Dieses liegt andererseits fest an den fixen Anschlägen an, welche den einstellbaren Führungselementen gegenüberliegen, wie dies für die fixen Anschläge 19 und 19' dargestellt ist. Somit kann durch motorische Einstellung der Schlitten 11 und 12 die Halteeinrichtung genau auf den Grundriss des zu positionierenden Paketes 10 bzw. die Blechabmessung H eingestellt werden.

Bevorzugt ist auch eine motorische Verstellung zur Anpassung an die andere Erstreckung des Bleches, wozu es bevorzugt ist, dass das in Transportrichtung c hintere Führungselement, bzw. in diesem Beispiel die Führungsleiste 14 und die Klinke 16 sowie deren gegenüberliegende Führungselemente in Transportrichtung und in Gegenrichtung zur Transportrichtung verstellbar sind. Dies erfolgt ebenfalls durch die Steuerung 27 und in Abhängigkeit von der dort eingegebenen Blechgrösse. In dem gezeigten Beispiel ist dazu der Ausleger 8 an der Auslegerhalterung 9 an einem Schlitten 22 befestigt und entlang der Halterung 9 verfahrbar, was durch einen nicht dargestellten Motor durch die Steuerung 27 erfolgt. Zusätzlich oder stattdessen könnte auch der Ausleger 7 mittels eines Schlittens 23 entlang der Auslegerhalterung 9 verfahrbar sein.

Die konstruktive Ausgestaltung der motorisch angetriebenen Schlitten 12, 11 und 22 bzw. 23 wird hier nicht näher erläutert, da solche Schlittenantriebe durch Spindeln, Kettentriebe, Zahnradantriebe oder auf andere Weise dem Fachmann bekannt sind und von ihm auf die jeweils bevorzugte Art gelöst werden können. In der Figur ist ein Motor 18 als Beispiel für einen Schlittenantrieb dargestellt. Die Steuerung 27, welche den motorischen Antrieb der genannten Schlitten steuert, tut dies aufgrund von Eingabewerten oder Vorgabewerten für die Quer- und Längserstreckung des Bleches bzw. des Blechpaketes.

Weiter wird durch die Steuerung 27 der Motor 26 gesteuert, welche die Abstapeleinheit 6 bzw. Saugeinheit in Richtung des Pfeiles d verstellen kann. Diese Verstellung ist unabhängig von der erwähnten Abstapelbewegung der Saugeinheit, welche bekannt ist. Die motorisch durch den Motor 26 und die Steuerung 27 bewirkte Verstellung bringt dahingegen die Saugeinheit 6 in eine Position, in welcher sie optimal an die Blechposition bzw. die Blechgrösse, und insbesondere deren Erstreckung H, angepasst ist. Bevorzugt erfolgt daher die Einstellung der Abstapeleinheit 6 in Abhängigkeit von der Verstellung der Führungselemente 14 und 15, so dass für jede Verstellung dieser Führungselemente die entsprechende passende Einstellung der Abstapeleinheit durch die Steuerung erfolgt. Somit kann durch die Eingabe der Blechpaketdimension oder durch die Auswahl einer vorgegebenen Blechpaketdimension sowohl die Halteeinrichtung 4 entsprechend eingestellt werden als auch gleichzeitig die optimale Position für die Abstapeleinheit und insbesondere für deren Saugelement 5 erzielt werden. Vorzugsweise kann diese mittig zu der Blecherstreckung H liegen.

Bei einem Hubtischabstapler 1 ist somit ein Hubtisch 3 vorgesehen mit einer darüber angeordneten Halteeinrichtung 4 für ein Paket 10 aus dem abzustapelnden Produkt. Die Halteeinrichtung positioniert das Paket mittels motorisch einstellbaren Führungselementen 14 und 15 und es ist eine motorisch in ihrer Lage über dem Paket 10 einstellbare Abstapeleinheit, insbesondere eine Saugeinheit 6 vorgesehen. Durch die motorische Einstellbarkeit der Führungselemente und der Abstapeleinheit ergibt sich ein Hubtischabstapler mit sehr rasch möglichem Formatwechsel. Ein solcher Hubtischabstapler wird vorzugsweise zur Zuführung von Blechen in einen Rundapparat verwendet, welcher einer Widerstandsnahtschweissmaschine für Behälterzargen vorgeschaltet ist.

## Patentansprüche

1. Hubtischabstapler (1), umfassend einen Hubtisch (3) zur Aufnahme eines anzuhebenden Paketes aus dem abzustapelnden Produkt, eine oberhalb des Hubtisches (3) angeordnete Halteeinrichtung (4), welche zum Halten und Positionieren eines in Abstapelung befindlichen Paketes (10) aus dem Produkt und zur Aufnahme von unten her eines vom Hubtisch anhebbaren Paketes ausgebildet ist, und eine Abstapeleinheit (6), insbesondere eine Saugeinheit, welche zur Einwirkung auf das in der Halteeinrichtung positionierte Paket (10) von oben her ausgestaltet ist, wobei die Halteeinrichtung (4) zur Positionierung des Paketes (10) sowohl Festanschläge (19, 19', 21) als auch motorisch (18) über eine Steuerung (27) verstellbare Führungselemente (14, 15) aufweist und die Abstapeleinheit (6) motorisch (26) mittels der Steuerung (27) in ihrer Lage über der Paketposition der Halteeinrichtung einstellbar ist, **dadurch gekennzeichnet, dass** die Lage der Abstapeleinheit (6) mittels der Steuerung (27) in Abhängigkeit von der Verstellung der Führungselemente eingestellt wird.

2. Hubtischabstapler nach Anspruch 1, **dadurch gekennzeichnet, dass** die Führungselemente (14, 15) motorisch quer zur Abstapelrichtung (c) verstellbar sind.

3. Hubtischabstapler nach Anspruch 2, **dadurch gekennzeichnet, dass** mindestens eines der Führungselemente (14), welches insbesondere an einem Ausleger (8) angeordnet ist, motorisch in Abstapelrichtung (c) und entgegen der Abstapelrichtung verstellbar ist.

4. Hubtischabstapler nach einem der Ansprüche 1 bis 3, **dadurch gekennzeichnet, dass** vier Führungselemente vorgesehen sind, welche als vertikal angeordnete Führungsleisten (14, 15) vorgesehen sind, welche in ihrem unteren Bereich schwenkbare Klinken zum Halten des Blechpaketes aufweisen.

5. Rundapparat zur Rundung von Blechabschnitten zu Behälterzargen-Rohlingen mit einem Hubtischabstapler nach einem der Ansprüche 1 bis 4.

6. Widerstandsnahtschweissvorrichtung für Behälterzargen mit einem Rundapparat nach Anspruch 5.

## Claims

1. Lifting table destacker (1), comprising a lifting table (3) for receiving a packet to be lifted from the product to be destacked, a support device (4) arranged above the lifting table (3), which is adapted to support and position a packet (10) being destacked from the product and to receive from below a packet which is liftable from the lifting table, and a destacking unit (6), particularly a suction unit which is adapted to act upon the packet (10) positioned in the support device, wherein, for positioning the packet (10), the support device (4) has fixed stops (19, 19', 21) as well as guiding elements (14, 15) which are motor (18) adjustable via a controller (27), and the destacking unit (6) is motor (26) adjustable by the controller (27) with respect to its position above the packet position of the support device, **characterized in that** the position of the destacking unit (6) is adjusted by the controller (27) depending on the adjustment of the guiding elements.

2. Lifting table destacker according to claim 1, **characterized in that** the guiding elements (14, 15) are motor adjustable transversally to the destacking direction (c).

3. Lifting table destacker according to claim 2, **characterized in that** at least one of the guiding elements (14), which is particularly arranged at an arm (8), is motor adjustable in destacking direction (c) and opposite to the destacking direction.

4. Lifting table destacker according to one of the claims 1 to 3, **characterized in that** four guiding elements are provided as vertically arranged guiding rails (14, 15), having in their lower area pivotable handles for holding the sheet metal packet.

5. Rounding apparatus for rounding sheet metal sections to container body blanks with a lifting table destacker according to one of the claims 1 to 4.

6. Resistance welding device for container bodies with a rounding apparatus according claim 5.

## Revendications

1. Dépileur à table élévatrice (1), comprenant une table élévatrice (3) pour recevoir un paquet à élever du produit à dépiler, un dispositif de support (4) arrangé au dessus de la table élévatrice (3), adapté à soutenir et positionner un paquet (10) étant dépilé du produit et à recevoir d'en bas un paquet qui peut être soulevé de la table élévatrice, et une unité de dépilage (6), particulièrement une unité d'aspiration adapté à réagir d'en haut sur le paquet (10) positionné dans le dispositif de support, le dispositif de support (4) ayant pour le positionnement du paquet (10) non seulement des butées fixes (19, 19', 21) mais encore des éléments de guidage (14, 15) déplaçable par moteur (18) via une commande (27) et l'unité de dépilage (6) étant ajustable par moteur (26), à l'aide de la commande (27), par rapport à sa position au dessus de la position du paquet du dispositif de support **caractérisé en ce que** la position de l'unité de dépilage (6) est ajustée à l'aide de la commande (27) dépendant du déplacement des éléments de guidage.

2. Dépileur à table élévatrice selon la revendication 1, **caractérisé en ce que** les éléments de guidage (14, 15) sont déplaçable par moteur transversalement par rapport à la direction de dépilage (c).

3. Dépileur à table élévatrice selon la revendication 2, **caractérisé en ce qu'**au moins un des éléments de guidage (14), qui est particulièrement arrangé à un bras (8), est déplaçable par moteur dans la direction de dépilage (c) et dans la direction contraire à la direction de dépilage.

4. Dépileur à table élévatrice selon l'une des revendications 1 à 3, **caractérisé en ce que** quatre éléments de guidage sont prévus en forme de rails de guidage (14, 15) arrangés verticalement, ayant dans leur partie inférieure des cliquets pivotables pour supporter le paquet de tôles.

5. Appareil pour arrondir des sections de tôle en corps de récipient bruts avec un dépileur à table élévatrice selon l'une des revendications 1 à 4.

6. Appareil de soudage par résistance pour des corps de récipient à l'aide d'un appareil selon la revendication 5.
